Europäisches Patentamt

European Patent Office

Office européen des brevets

(19)

(11) Publication number: 0 404 399 A2

# EUROPEAN PATENT APPLICATION

(12)

(21) Application number: 90306214.9

(51) Int. Cl.⁵: **G11B 27/031**

(22) Date of filing: 07.06.90

(30) Priority: 19.06.89 US 368474

(43) Date of publication of application:
27.12.90 Bulletin 90/52

(84) Designated Contracting States:
**DE FR GB**

(71) Applicant: **International Business Machines Corporation**
**Old Orchard Road**
**Armonk, N.Y. 10504(US)**

(72) Inventor: **Beitel, Bradley James**
**17222 Skyline Boulevard**
**Woodside, California 94062(US)**
Inventor: **Gordon, Robert Douglas**
**1321 Lennox Way**
**Sunnyvale, California 94087(US)**
Inventor: **Smith, Kenneth Bradley**
**758 Holly Oak Drive**
**Palo Alto, California 94303(US)**
Inventor: **Thamm, Howard Charles**
**7920 San Felipe, Apt.412**
**Austin, Texas 78729(US)**
Inventor: **Wilkes, Michael David**
**5832 Tributary Ridge Drive**
**Austin, Texas 78759(US)**

(74) Representative: **Harris, Ian Richard**
**IBM United Kingdom Limited Intellectual**
**Property Department Hursley Park**
**Winchester, Hants. SO21 2JN(GB)**

(54) **Audio editing system.**

(57) A system and method is provided for facilitating the editing of digitized audio data and commentary associated with such data under digital computer-assisted control. Differing types of data objects stored within an audio file in a computer may be cut and pasted separately or treated as a single object. Provision is made for storing points objects and audio index objects alone or in combination both with respect to a source and target file. Combinations of these objects in the source and target files which must be accommodated during cut and paste operations are handled by the system which accommodates maintaining temporal and spatial relationships between objects during these editing operations.

FIG. 1D

FIG. 1A

AUDIO IN 7

AUDIO OUT 9

4

AUDIO EDITOR
18

14A

16A

AUDIO PROCESSOR
18A

38A    36A

24A    26A

STORAGE
34A

30A

32A

BUFFER
28A

DATA PROCESSOR

40A

CONSOLE
42A

DISPLAY 5

KEYBOARD 6

**FIG. 1B**

12

DISPLAY OUTPUT 16

14 USER INPUT

22

AUDIO EDITOR INTERFACE WITH USER

20

18

44

OTHER PROCESSING
32

30

24 COMMANDS

TYPE OF COMMAND
26

28    EDITING COMMAND

36

CUT

34

CUT OR PASTE

PASTE

38

CUT PROCESSING
42

PASTE PROCESSING
40

ACCESS AUDIO DATA
46

55
DATA FLOW

ACCESS AUDIO DATA
48

AUDIO DATA IN MEMORY
52

54

CUT BUFFER IN MEMORY
50

58    60

64

PC DISK

62

56

10

**FIG. 1C**

2

## AUDIO EDITING SYSTEM

This invention relates to a data processing system for the editing of audio data objects.

The recording of sound tracks has, in the past, been accomplished by analog devices such as tape recorders. Editing of the sound recordings or sound tracks was conventionally accomplished mechanically by splicing tapes or by the recording or bouncing of sound tracks or portions thereof from one track or tape recorder to another, making the editing changes during this process.

With the advent of analog-to-digital and digital-to-analog converters, digital signal processors, and the like being applied to the audio recording arts, efforts have been made to provide editing of the audio information while in digital form by means of various digital processing systems. A typical commonplace application of such digital data processing, although the data is not sound data, is in the digital data processing associated with various computerized text processors or editors. These text editors convert text information into a sequence of digital data that is stored in data blocks. Editing functions, such as inserting, deleting, moving, or copying, are easily accomplished by manipulating these data blocks. The actual text is commonly displayed on a display screen to the text editor operator or user so that the operator may see the results of the commands given to the text editor and the actions taken by the text editor in response to these commands.

Numerous digital systems have been provided for facilitating a user friendly interface and system for effecting editing of digitized audio data under control of a personal computer. Among these are the systems and interfaces disclosed in the following references. "Basic Editing Functions for a PC Audio Editor, IBM Technical Disclosure Bulletin, Vol. 30, No. 12, May 1988; "Screen Format for a Basic Audio Editor, IBM Technical Disclosure Bulletin, Vol. 31, No. 9, February 1989; "Display of Audio Signal Processor Setup (Hook Up) for a PC Audio Editor", IBM Technical Disclosure Bulletin, Vol. 30, No. 10, March 1988; "Creation/Modification of the Audio Signal processor Setup for a PC Audio Editor", IBM Technical Disclosure Bulletin, Vol. 30, No. 10, March 1988; "Audio Object Structure for PC-Based Digital Audio", IBM Technical Disclosure Bulletin, Vol. 30, No. 10, March 1988; "Single Display Panel Structure for a PC Audio Editor", IBM Technical Disclosure Bulletin, Vol. 30, No. 10, March 1988; and "Audio Editor system", IBM Technical Disclosure Bulletin, Vol. 30, No. 12, May 1988.

Whereas various means are known in the art for splicing together sections of digitized audio data as desired, the systems frequently suffer from a drawback uniquely associated with the audio aspect of the data and the human interaction necessary during the editing process. For example, throughout the course of editing audio data to provide a sound track for an extended overdub to video source material, numerous small audio segments will be identified which must be copied, erased, moved to other temporal locations and the like in order to achieve the desired finished sound track. In the past it has been common place for a conventional professional sound editor to manually develop a written script indicating where audio segments are to be inserted or overdubbed. In like manner, it has further been conventional to maintain a list of the audio source material segments available ior such overdubbing and descriptive commentary relating to each such segment in order to select the proper segment for insertion at the proper place in the video.

From the foregoing, it will be appreciated that in extended works with numerous audio segments the problem of editing the audio track can become quite complicated in terms of keeping track oi the descriptive characteristics of each audio segment and its time of occurrence, particularly when it is understood that in the typical editing process audio data and/or associated commentary from a source file may be copied to a target or destination file location which may also have audio and commentary data associated with it or both as well as temporal and spatial interrelationships. Maintaining these relationships in source and target data can be an extremely difficult problem to manage.

It would thus be highly desirous to provide a data processing system for facilitating editing of differing digitized data object types including sound and/or commentary.

Therefore, in accordance with the present invention there is provided a data processing system for editing audio data objects and points objects comprising: storage means for storing the audio data objects and the points objects; means for displaying a plurality of play times and corresponding comments, associated with the audio data objects and points objects; means for designating selected ones of the play times and the comments to be cut and pasted; means for designating a location between other selected ones of the play times for the pasting of the selected ones of the play times and the comments; and logic for cutting and pasting the selected ones of the play times and comments to the location.

The invention therefore provides for facilitated computer assisted editing of differing digitized data.

object types including sound and/or commentary.

In a preferred form of the invention each the play time indexes to a unique segment of digitized audio data, other selected ones of the play times and the audio data segments corresponding to the other selected ones of the play times have a predetermined temporal interrelationship; and the logic for cutting and pasting preserves the temporal interrelationship after the pasting of the selected ones of the play times and the comments. In an alternative preferred form of the invention other selected ones of the play times and the audio data segments corresponding to the other selected ones of the play times have a predetermined spatial interrelationship; and the logic for cutting and pasting preserves the spatial interrelationship after the pasting of the selected ones of the play times and the comments.

In accordance with another aspect of the invention there is provided a method for editing audio data objects and points objects associated with source and target files, the method comprising the steps of: detecting a desired user-indicated cut operation in response to user input to the system; processing the audio data objects and points objects in response to the indicated cut operation; detecting a desired user-indicated paste operation in response to user input to the system; processing the audio data objects and points objects in response to the indicated paste operation.

In a preferred form of the invention the step of processing the audio data objects and the points data objects in response to the paste operation comprises the step of detecting if the points objects only are in a cut buffer and, on detection that not only points objects are in the cut buffer, detecting if the audio objects only are in the cut buffer and, on detection that not only audio objects are in the cut buffer, the step of detecting whether an audio file is empty; and inserting all lines from the cut buffer in the target file in response to the detecting when the audio file is empty. On detection that not only audio objects are in the cut buffer, the method preferably comprises the further steps of detecting whether one of the audio objects is present on a target line in the target file; and inserting all lines from the cut buffer into the target file in response to the detecting of the audio object on the target line, detecting if no the audio object and a non-blank the point object are on the target line; and inserting all lines from the cut buffer in the target file in response to the detection of no audio object and the non-blank point object being on the target line, deleting one line of the audio object and the point object from the cut buffer, overlaying the deleted line of the audio object and point object onto the target line, detecting whether additional data is in a paste buffer, incrementing to a next audio object and/or point object in the source file.

The invention will be best understood by reference to the following description when read in conjunction with the accompanying figures, wherein:

Fig. 1A is a block diagram of a data processing system configured as an audio capture and editing system for digital audio data;

Fig. 1B is a more detailed block diagram of a portion of the data processing system of Fig. 1A;

Fig. 1C is a high level flow chart indicating the audio editor executive routine executed by the system of Fig. 1;

Fig. 1D - Fig. 8 are audio editor screen displays indicating the various combinations of editing functions provided by the system in operating upon audio index and commentary objects;

Figs. 9-13 are flow diagrams of an audio editor executive routine for use with the system of Fig. 1A in implementing the invention;

Fig. 14 is a representative user interface screen illustrating action bars and command controls for effecting the editing functions of the system.

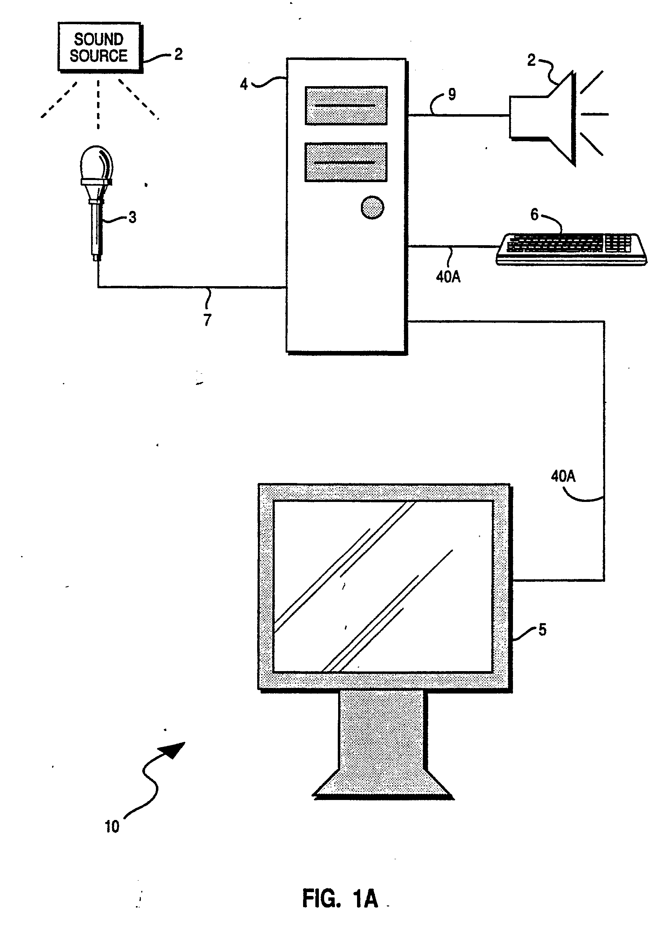

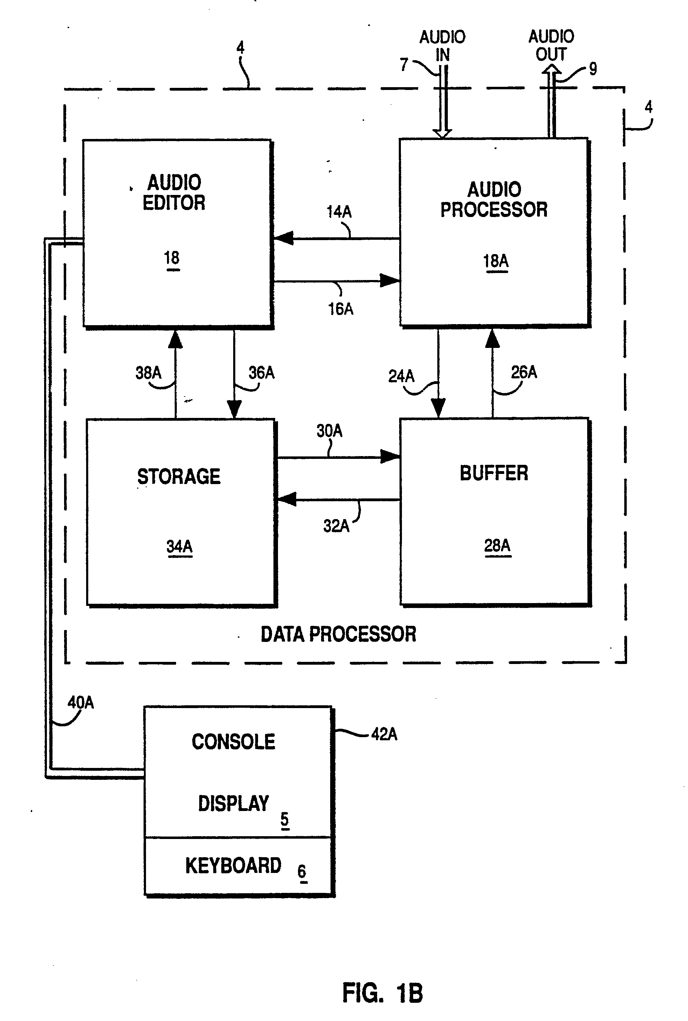

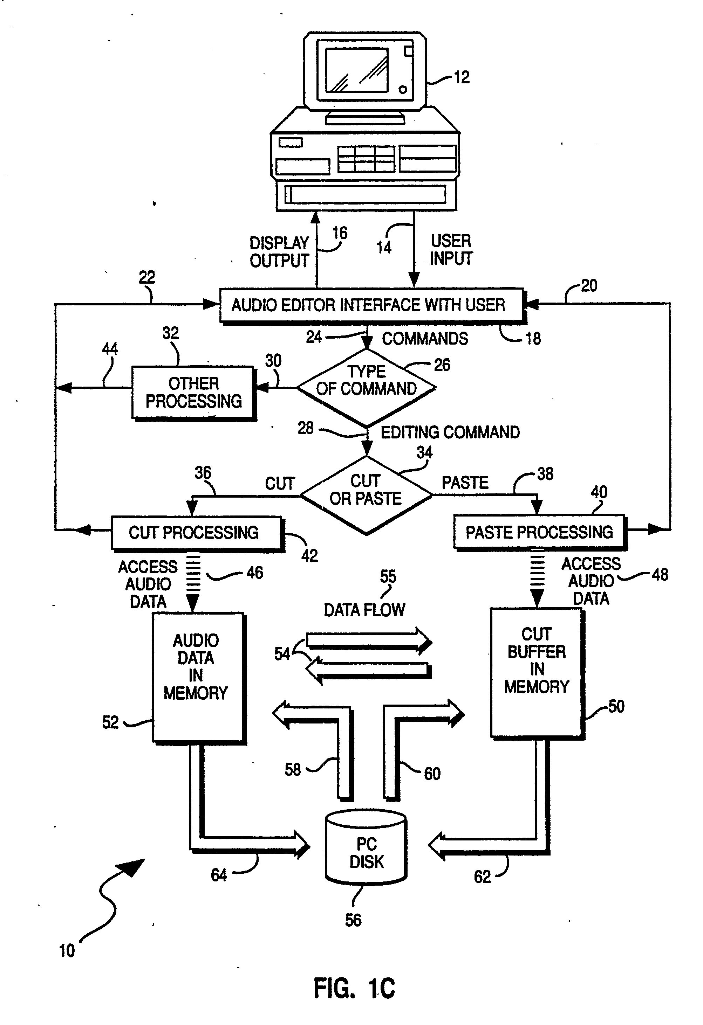

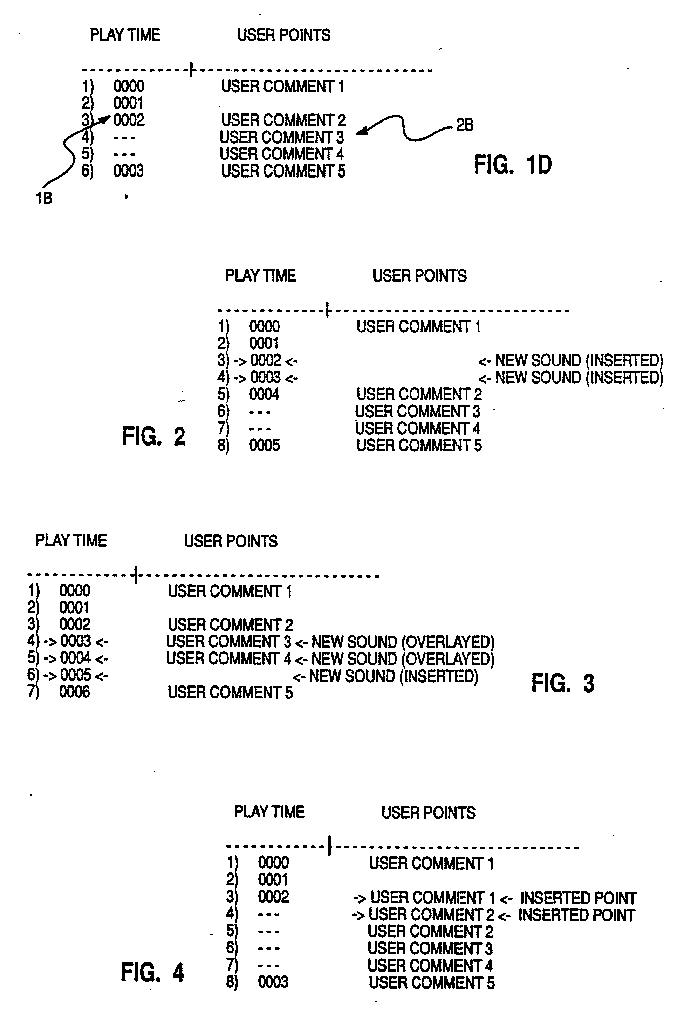

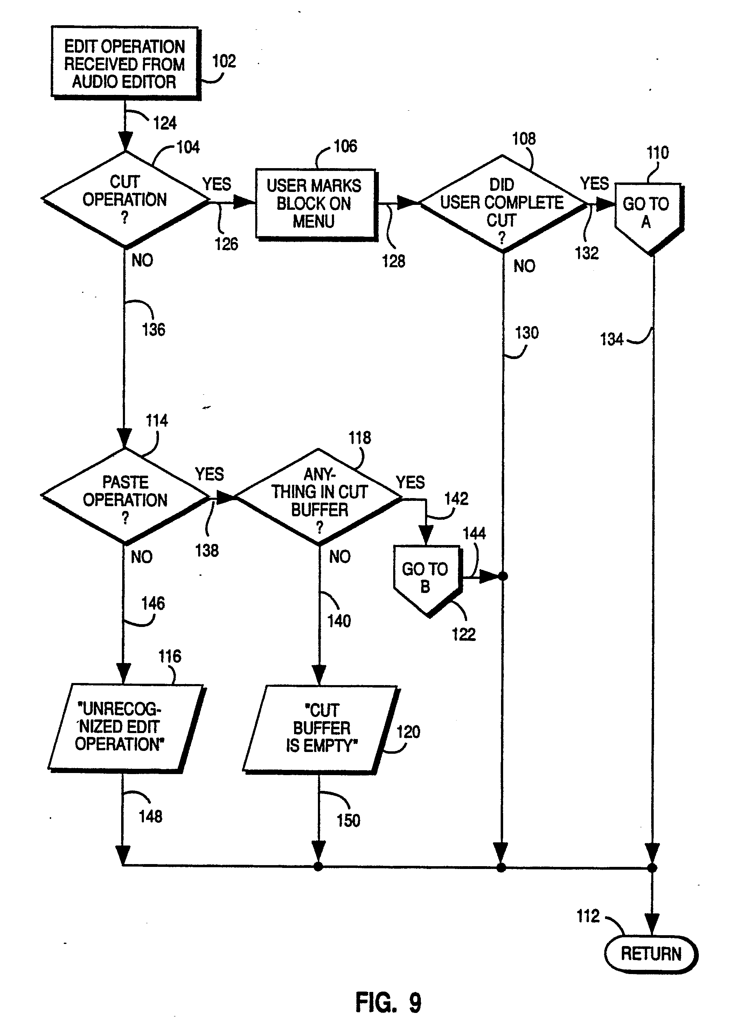

First with reference to Figs. 1A and 1B, a high level description will be provided of the digitized sound editing system of the present invention which will include a description of the manner in which analog audio data is transformed by the system into digital form for use by the editor. This will be followed. with reference to Figs. 1D - Fig. 8 with a more detailed description of the problem addressed by the invention with particular reference to the numerous permutations and combinations of both audio object and commentary object data types which must be accommodated by the system. Next, a high level overall description of the flow of the program executed by the system for effecting the audio editor function of the subject invention will be discussed with reference to Fig. 1C followed by a more detailed description of the program with reference to Figs. 9-13.

First with reference to Fig. 1A, a digital audio editing system 10 is depicted which includes a digital computer 4, preferably in the form of a personal computer, a keyboard 6 for providing user input on line 40A to computer 4, and a monitor 5 for providing digital output to the user and prompts through line 40A for user input on the keyboard 6. Included in the computer 4 is an audio processor 18A to be described with reference to Fig. 1B. This processor performs numerous functions but essentially converts analog audio input data on line 7 to digital form whereupon it is edited and processed in digital form by the computer 4 and then converted by the processor 18A to analog form and output on line 9 to a speaker 2 or the like or to some other output device such as the display 5.

From Fig. 1A it will be apparent that in one embodiment the system 10 includes a conventional transducer such as a microphone 3 for converting,analog sound from a convenient sound source 2 into the electrical form for delivery on line 7 to the processor 18A.

Referring now to Fig. 1B, it will be recalled that this invention is for an audio editor that in its preferred embodiment is implemented on a personal computer. Specifically, in this embodiment, an IBM Model 70 Personal Computer manufactured by the International Business Machines Corporation, Armonk, New York, is used. This computer, consistent with Fig. 1A is designated in block form with reference number 4. The processor has an audio editor 18 which includes the audio editor program being executed by the processor. Also included are storage 34A, which can consists of both disk and RAM (random access memory) storage, and a buffer storage 28A that interfaces between the storage 34A and audio processor 18A. The buffer storage 28A may be a cache or a series of caches of a suitable size for the tasks to be performed by the audio editor of block 18. The audio processor, as previously noted, receives an audio analog input on line 7 and provides an analog audio output on line 9. Although with reference to Fig. 1, external mechanism has been depicted for converting this analog audio data into the digital form required by the system 10, this was done for sake of completeness and for purposes of illustration. It will be readily perceived that the audio editing invention is readily adapted for use with audio data which is already stored in digitized form by any number of means well known in the art.

Still referring to Fig. 1B. the audio processor 18A may be in the form of any of a number of commercially available processors whose function is to convert analog data into digital form and thence to reconvert it to analog form under control of a bus of the computer 4. Accordingly, in one embodiment the audio processor 18A may take the form of an Audio Capture and Playback Adapter available from the International business Machines Corporation. This embodiment of the audio processor includes the Texas Instruments TMS320C25 signal processor. As previously noted the purpose of the processor 18A in part is to digitize audio signals input on line 7 to provide digital data representative of the audio information input and subsequently to convert digital data from storage 34A in the data processor 4 to an analog signal which is output on audio line 9.

The terminal 42A connected to the data processor 4 via line 40A may be recognized as consisting in this embodiment of the console display 5 and a keyboard 6 which are both of conventional design.

In Fig. 1B, the audio editor 18 communicates with the audio processor 18A over lines 14A and 16A. The audio editor 18 also communicates with the storage 34A over lines 38A and 36A. Data is passed between the audio processor 18A and the storage 34A on lines 38A and 36A, and further passes through the buffer 28A via lines 24A, 26A, 30A and 32A. Control of the audio editor function is accomplished by the audio editor software represented as block 18, the flow and detailed description of which are hereinafter provided with reference to Fig. 1C and Figs. 9-13 in which the executive routine of the audio editor software is illustrated.

Now that an overall description of the environment in which the invention preferably executes has been provided, a more detailed description of the problem addressed and solved by the invention will be provided with reference to Figs. 1D - Fig. 8.

The external interface of the system 10 is intended to facilitate the editing of different types of data objects within an audio file of the computer 4. These objects may be "cut" and "pasted" separately or treated as a single object. As will be readily understood shortly after a description of the operations to be performed, managing these editing operations and maintaining the original relationships between the objects being edited is a highly complex task and requires more than a simple "insert" or "overlay" editing scheme associated with editors of the prior art such as word processors or the like.

The system 10 previously described allows for the capture and editing of digital audio data. This audio data may be stored conventionally in computer files such as those associated with the DOS, OS, or other operating systems and have two basic data objects available for editing by the user: the audio index object and the commentary or "points" objects.

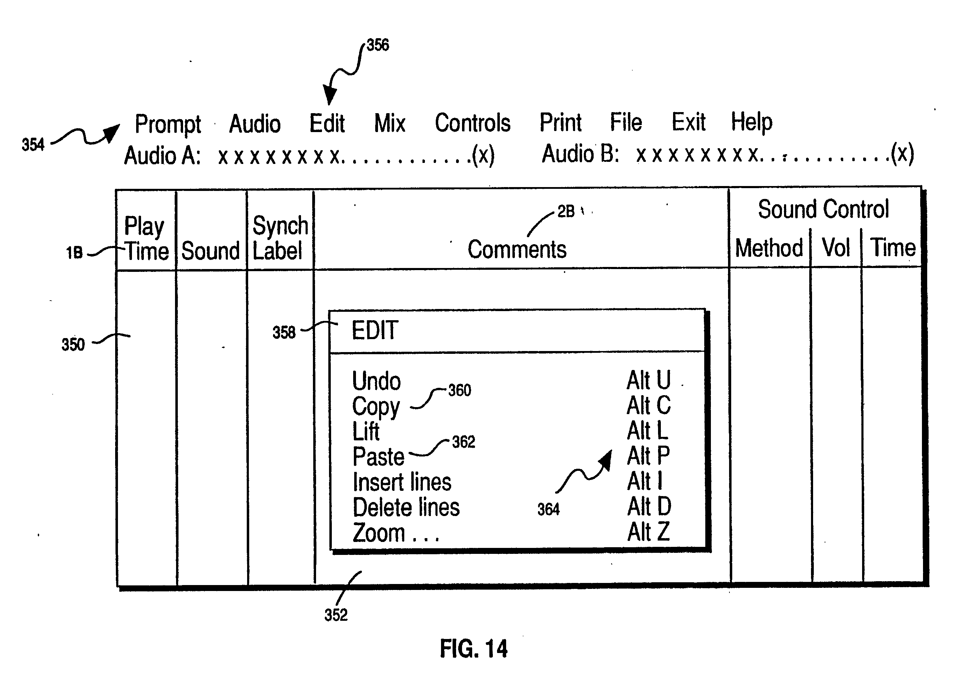

The audio object data type is a set of integer offsets which index into a file of digitized audio. Each offset in this index represents the minimum granularity of digitized audio which can be randomly retrieved and played by the system 10. This minimum amount of digitized audio will be referred to as one audio segment herein. All computerized access to the digitized and stored audio is via these integer offsets. A play time 1B, Fig. 1D is associated with every offset in the file, and this play time is the user interface into the audio file. To play the sound at seconds number 10-15 in the audio file, for example, the indexes associated with seconds 10-15 are used to retrieve the digitized audio from the computer storage. These play times 1B would appear in the column shown in Fig. 14 which is a display of a typical user interface screen of the system when in an editing mode.

The "points" object data type is a set of user annotation fields 2B, Figs. 1D and 14, which refer to or describe the digitized audio data. These text fields are attached to specific points in time. Every segment of audio will have at least one text field associated with it which may or may not be blank. Some segments will have multiple text fields associated with it, any of which may or may not be blank. These fields allow the user to document and/or control (via commands such as VOLUME level) a specific segment of digitized audio.

The relationship between the audio objects and point objects are presented to the user in the form of a table on the user interface screen 14 appearing on the monitor 5. Fig. 1D is a typical generalized representation of the audio and points objects displayed in a table format on the screen. The leftmost column 1B "Play Time" is the visual representation of the audio object displayed as Play Time (sound). Each entry in the table appearing on the user interface screen represents the minimum granularity of indexable audio. Each number in this field represents the amount of time required to play one audio segment. This Play Time is dependent on the granularity of the offsets into the audio data file. The right hand column (User Points or Annotations) represents the user-supplied annotation fields ("point"). It will be noted that the user field for time 0001 is not used, while time 0002 has three user fields or comments attached to this time period.

The audio table allows the user to easily edit the audio and points objects using cut and paste functions of the audio editor software. The objects may be cut and pasted individually or treated as a single object. During all editing operations, the relationship between the audio object and the points object must remain the same. points may become attached to different Play Times in the table, but they must always refer to the same physical offset (i.e., the same sound) in the indexed file. Thus, with reference to Fig. 1D, if ten segments of audio are inserted before Play Time 0000, "User Comment 1" must now refer to Play Time 0010 to maintain the same relationship as before the insert. With continued reference to the Figs. 1D - Fig. 8 which are specific examples of the different types of paste operations required by the user and allowed by the system, it may be appreciated how the invention provides for accommodating these complex audio editing situations.

Three types of cuts may take place in an audio table: audio object only (sound), points object only (points), and a combination of both the audio object and the point object which may be cut and therefore pasted together. Because these two objects are very different but still related, special rules must be followed when pasting the information back into the audio table as provided for in the subject audio editor executive program. Description of these cases follows.

1. Pasting of Audio Segments Only (sound only exists in the cut buffer)

During pasting of audio segments, all user annotations which exist after the insertion line must be updated to reflect the amount of time (sound) being inserted. Two types of paste exist, depending upon the format of the destination line of the paste:

A. An Audio Segment Exists at The Destination

In this instance the audio editor will insert the sound and adjust all following points by the amount oi time inserted to reflect the new time positions. Blank user annotations are attached to these new segments.

As an example, in the operation of pasting two segments of audio at audio table row 3 of Fig. 1D, the result is depicted in Fig. 2.

B. Audio Object Does Not Exist at the Destination

A user annotation only exists at the destination line. The sound will be overlayed, attaching existing point only lines on a line-by-line basis to the new pasted audio segments. Once an existing audio segment sound is encountered on a line, the remaining segments are inserted as in the hereinabove noted case 1A. Thus, as an example with reference to Fig. 3, in the operation of pasting three segments of audio at audio table row 4 of Fig. 1D, the result is depicted in Fig. 3.

2. Pasting of User Annotations Only (i.e., user annotations only exist in the cut buffer)

User points only are inserted into the points object. Two types of paste exist, depending upon the format of the destination line of the paste:

A. The Point At the Destination Line Contains a Non-Blank User Annotation

In this case the audio editor executive will insert all points creating user annotation lines only. As an example of this, in the operation of pasting two user annotations at audio table row 3 of Fig. 1D, the result is depicted in Fig. 4 which will appear on the monitor 5 after completion of the editing process.

## B. The Destination Line Contains a User Annotation But It is Empty (i.e., a blank field)

In this case the audio editor executive program will overlay the blank annotation fields at the destination on a line-bu-line basis until a non-blank field is encountered. At this line, the remaining fields will be inserted by the program as in the case 2A hereinabove described.

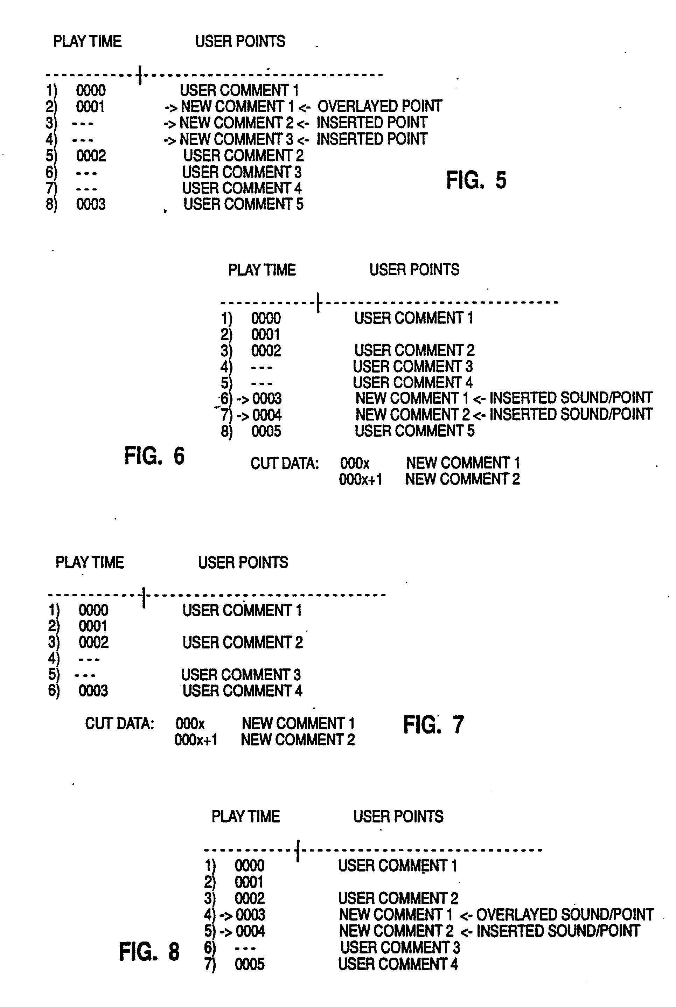

As an illustration of this function of the audio editor. in the operation wherein a paste is performed oi three user annotations at audio table row 2 of Fig. 1D, the result is depicted in Fig. 5.

## 3. Pasting of Both User Annotations and Audio Segments (i.e., both audio segments and user annotations exist in the cut buffer)

Audio segments are pasted into the audio object, while points are pasted into the points object. The relationship between the audio segments and the user annotations in the cut buffer must also be maintained after the paste. Two types of paste operations exist depending on the format of the destination line of the paste:

## A. An Audio Segment Exists on the Destination Line OR The User Annotation at The Destination Line is NON-Blank

The audio editor will insert all of the audio segments and user annotations at the destination line maintaining all relationships.

As an illustration of this, in the operation of pasting two rows of sound and points at audio table row 6 of Fig. 1D, the result is displayed in Fig. 6.

## B. An Audio Segment Does NOT Exist on The Destination Line, AND the User Annotation at The Destination Line is Blank

In this case the audio editor of the instant invention will overlay the blank lines at the destination on a line-by-line basis with the audio segments and user annotations in the cut buffer. This overlaying will continue until an audio segment or a non-blank annotation line is reached. At this line, the audio editor program will insert the remaining segments/annotations as in the case 3A above.

As an illustration of this, in the operation of pasting two rows of audio segments and user annotations at audio table row 4 of Fig. 7, the result shown in Fig. 8 is provided by the invention.

Now that an appreciation has been gained of the numerous cases which must be handled by the audio editor given the permutations and combinations of audio and point objects which may exist in the source and target files, a high level description of the flow of the audio editor executive program 18 of the invention will be provided with reference to Fig. 1C. This editor program will be executed with a digital computer 12 which may be recognized as an alternate form of the host 4, keyboard 6, and monitor 5 assembly of Fig. 1A. This high level description will be followed by a more detailed description of the audio editor program design with reference to Figs. 9-13.

Fig. 1, illustrates the environment 10 in which the invention operates and a high level flow diagram of a computer program executing on host 12 for effecting the invention. A host system 12 is provided which may be in the form of a conventional personal computer. User input 14 is provided from host 12 to executing audio editor 18 software, which essentially is the interface with the user. The editor interface 18 will effect displaying the screens and menu to be described and shown as with path 14 indicating the user keying in input which would be parsed into commands by interface 18. Proceeding down path 24, the type of command is determined at decision tree 26 (i.e. whether it is an editing command relating to the invention or some other type of processing). If it is some other type of command. which is not editing, flow proceeds down path 30 and that processing is performed as indicated at box 32. Once that processing is completed, flow proceeds down path 44 and up path 22 and whereby the main loop is entered at 18 waiting for more input from the user.

Referring again to decision tree 26 if the command is an editing command from the user, flow proceeds down path 28 to decision tree 34 where it is determined whether the command is a cut or a paste command. If it is a cut command, flow proceeds down path 36 whereupon cut processing is performed, 42. If the user has marked a valid block of data with a cursor, highlighting or the like then it is necessary to fetch that data out of the PC memory of system 12 or possibly, if it overflowed, out of the PC disk, which is indicated by path 46. Box 52 represents the step of fetching this data from PC system 12 memory. Also path 64-58 represents fetching data off the PC disk 56 if necessary. That data would then be moved from block 52 across path 54 to the cut buffer, in system 12 which is shown by block 50. If the data overflows, (i.e., there was more data than would fit in memory), then flow proceeds down path 62 whereby data would be stored on the disk 56.

Referring now to decision tree 26, if the command from the user is a paste edit command, flow proceeds down path 28 through tree 34 along path 38 to block 40 which is the paste processing as described herein. As part of the paste processing, if there was audio data in the cut buffer, it is accessed in memory as shown by path 48 to box 50. The data in 50 (and possibly any data that had overflowed on to the disk 56 which is fetched as shown by path 62-60) is moved across path 55 and back into the audio object itself, 52, in memory as shown by arrow 55. Again if that data movement causes overflow, it would overflow from box 52 through path 64 to the PC disk 56. As shown by path 60, if when storing data in the cut buffer it exceeded memory, the data would have been stored on disk 56. At this point when a paste operation is performed the system 10 would read all the data that was in memory. If there was additional data it would be read off the disk 56 and moved to the audio data memory.

Referring back to data path 58, if when moving data from the audio object itself into the cut buffer if that data had overflowed on the disk 56 it would have to be read into memory also from the disk 58 as shown by path 58. At block 40, paste processing, at the completion of the paste processing operation flow proceeds through path 20 back to the main loop at 18, whereupon the system awaits further user input. Referring back to block 42, at the end of the cut processing flow proceeds up path 22 back to the main loop at 18, whereupon, in like manner, the system 10 requests and awaits additional user input.

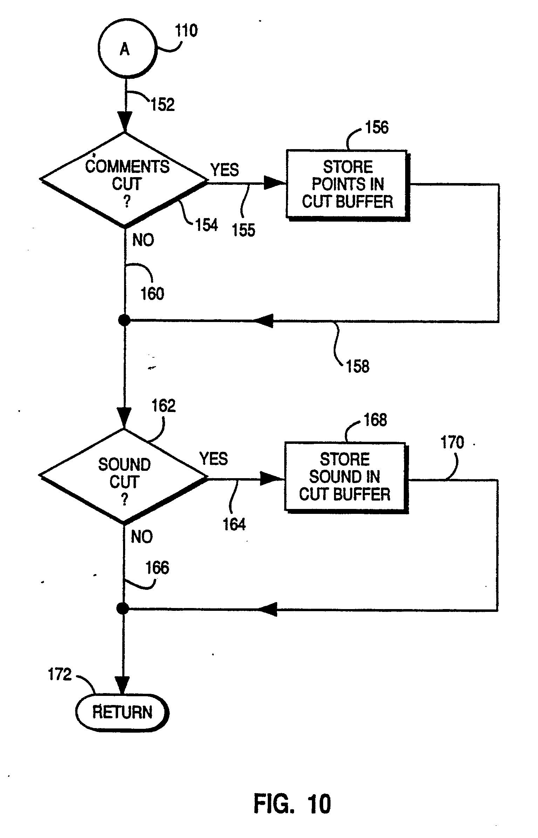

Referring now to Fig. 9, block 102 indicates that in response to user input 14, Fig. 1C, a request for an edit operation has been received from the editor 18, i.e., the user has responded to an action bar 354, Fig. 14 displayed on the monitor screen 5 of host 12 or the like and asked for a particular editing operation. Once the indicated operation 102 has been registered flow proceeds through path 124 to decision tree 104. If the requested operation is a paste operation, flow proceeds down path 136 and to the paste logic, 114. If it is a cut operation, then there is more user interaction necessary, so flow proceeds along path 126 to block 106 whereupon the user provides edit information by user input onto the screen of host 12. Basically from a starting point, the current place on the screen, the interface permits a user to cursor up and down and mark displayed information for editing, whether it is audio, comments or both. Thus at 106 the user cursors from a starting position from where the cut operation was requested up or down and left or right to instruct system 10 of the exact area desired to be cut, which can include the digital audio itself or comments or both as indicated. Once the user has marked the desired area, flow proceeds down path 128 to decision tree 108. The user still has the option to cancel at this point so if for example an escape key has been depressed flow would proceed down path 130 and return at 112. If the user did complete the cut, flow proceeds down path 132 and to link 110 at "A" on Fig. 10, to be discussed later, which is a points/audio cut subroutine.

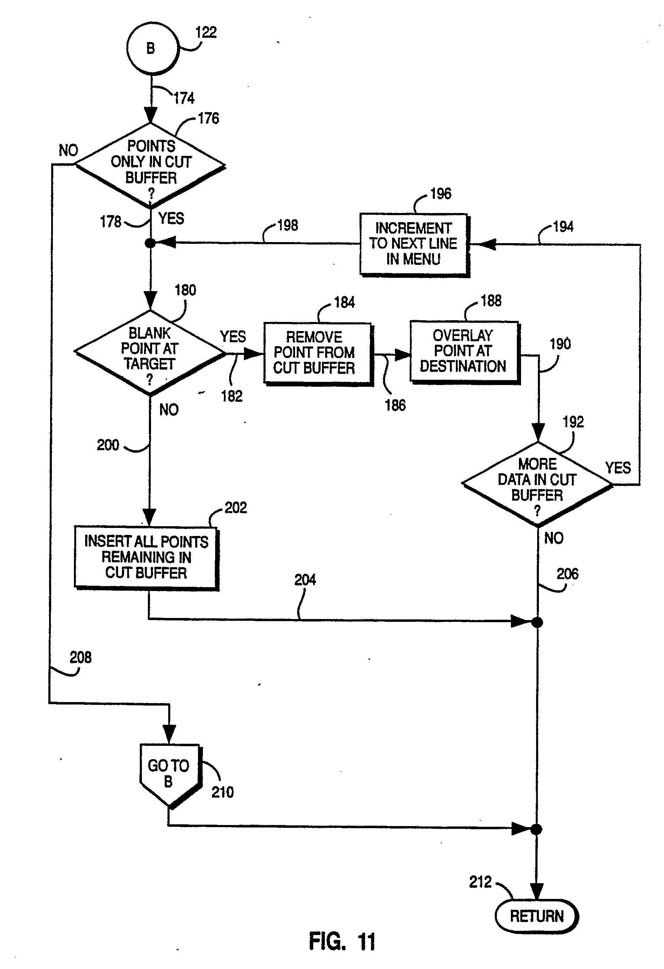

Returning from link 110 at the completion of the operation, flow proceeds on path 134 again to exit at box 112. Referring to decision tree 114, if the user-indicated operation is not a paste operation, then it is an unrecognized edit operation and flow proceeds down path 146 to box 116 whereby system 10 detects there is no further work to be done for this case (except perhaps issuing an error message) whereupon flow proceeds down path 148 to exit at return 112. If the user did request a paste operation at 114, flow of system 10 would proceed down path 138 to decision tree 118. If there is no data in the cut buffer, indicating there really is no work to do (i.e., there is no sound or comment data in the cut buffer) then flow proceeds down path 140 to put out an error message (indicating the buffer is empty and thus there no processing to perform) at box 120, and then flow proceeds down path 150 to exit at 112. At block 118 if there is data in the cut buffer, i.e., there is data to paste, then flow proceeds down path 142 to link 122, described in Fig. 11 which is a paste subroutine. At the end of the operation B, 122, flow would return to Fig. 9 at 144 and exit out at 112.

Fig. 10 will now be described commencing with starting at point A which was exited to from 110 on Fig. 9. Referring to point A on Fig. 10 at 110, flow proceeds down path 152 to decision tree 154, wherein system 10 determines whether there is comment data in the cut buffer, i.e., whether the user marked comments on the user interface screen when the cut was requested. If so, then flow proceeds down path 155 to box 156 and these marked comments are stored in the cut buffer. This action would occur for comments physically in memory, however if there was not sufficient memory to do so, the data would overflow onto a disk storage 56 as before, although this is transparent to the user, who may simply perceive in both instances the comments have simply been placed in a cut buffer. Referring to tree 154 if there were no comments in the buffer, then there is no further processing to be performed whereupon flow proceeds down path 160 to the next decision tree at 162 wherein system 10 queries whether the user requested digital audio data to be stored in the cut buffer. At 156, once the comments or points are stored in the cut buffer, flow proceeds down path 158 again to decision tree 162. At 162, if there was sound data the user caused to be placed into the cut buffer, flow proceeds down path 164 to box 168 and the system 10 would store that sound data in the cut buffer, or more preferably and precisely the system would store the indexes into the digital audio in the buffer. To the user, storage of indexes rather than actual audio data is transparent. As before index data is stored in memory if there is sufficient room in the cut buffer, but if not the data would overflow to disk 56.

After the storing operation flow proceeds along path 170 to return at 172 back to Fig. 9 and the link 110. Flow then proceeds further down path 134 to 112 a return. At 162, decision tree in Fig. 10, if there was no sound data cut indicated then there is no further processing to be performed and flow would proceed down path 166 to exit at 172 back to 110 on Fig. 9.

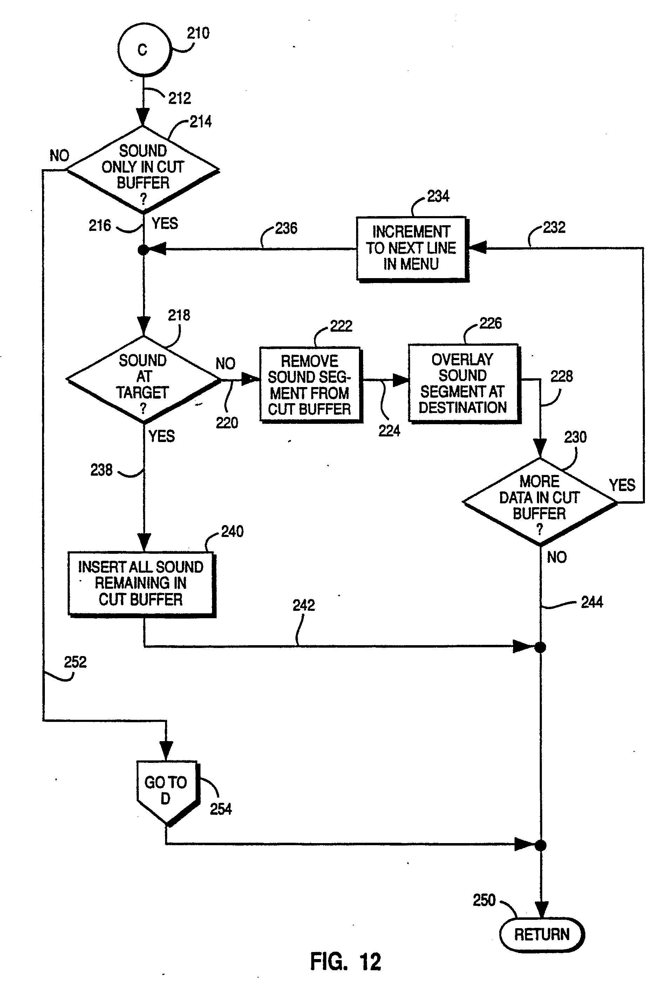

Referring now to Fig. 11 at point B which was exited to from Fig. 9 at 122, the flow, upon user request of a paste, proceeds down path 174 to decision tree 176, wherein the system 10 queries whether there is point data only in the cut buffer. If the answer is no, and there is sound and point data in the buffer then flow proceeds along path 208 to branch 210, which branches to Fig. 12 point C to be described later which may be referred to as a "sound only" in cut buffer" subroutine. At 176, which is a decision tree indicating if there are only points in the cut buffer, if so flow proceeds down path 178 to decision tree 180, wherein system 10 queries whether there is a blank point at the target. If so (meaning there is basically no other point data there although there may be sound data), then the system can overlay the point in the cut buffer. Thus if it is a blank point flow proceeds down 182 and a point is fetched out of the cut buffer at 184, and flow proceeds down path 186. The point is overlayed at 188 whereupon flow proceeds down path 190 to the next decision tree 192.

If there is more data in the cut buffer, flow will then proceed up path 194. However, if there is no more data, the cut buffer is therefore empty and flow will proceed down path 206 to return at 212 to Fig. 9 at 122. As indicated at block 192, if there is more data in the cut buffer to process flow then proceeds along path 194 to block 196 whereupon the system increments to the next line on the screen. In summary, at this point the system basically has overlayed one blank line with a point and then moves down to the next line to process it. After such processing flow proceeds down path 198. Thus, after moving down one line, flow proceeds down path 198 and to decision tree 180 in which again the system determines whether there is a blank point or not at the target. If there is no blank point (which means there is data in the cut buffer which cannot be overlayed) flow proceeds down path 200 to block 202 whereupon the system insert all the points remaining in the cut buffer at that position. Flow then proceeds down path 204 to exit at 212 back to Fig. 9, at 122.

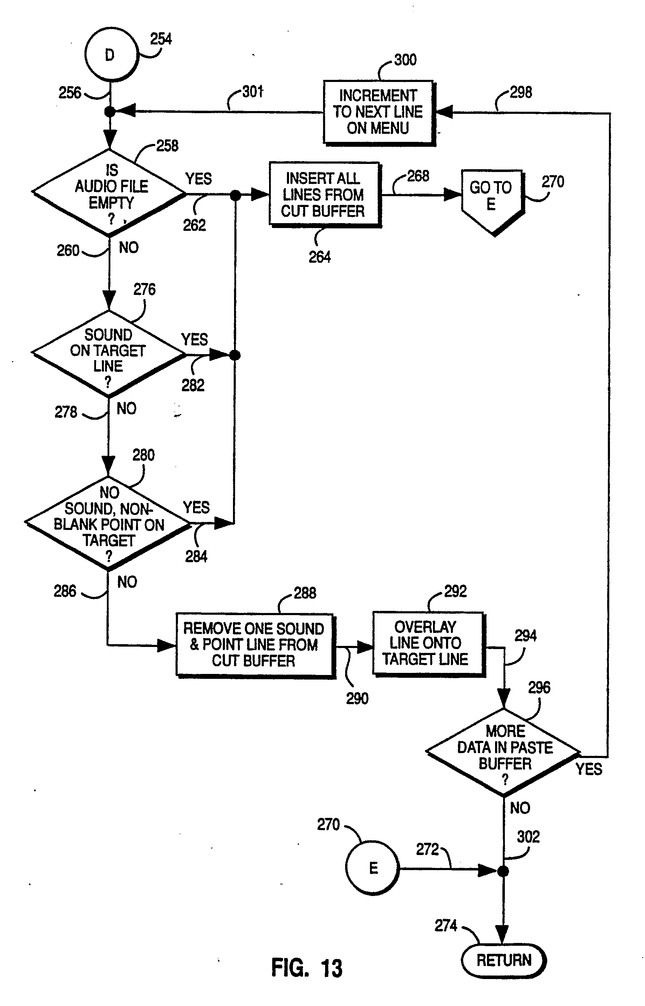

Referring now to Fig. 12, block·210 (which was branched to from Fig. 11, point 210) the system is still performing a paste, and accordingly flow proceeds down path 212 to decision box 214, which is a test to see if there is sound data only in the cut buffer. If there is both sound and point data, then flow proceeds along path 252 and branches to Fig. 13, at 254. As queried by the system at decision tree 214, if there is only sound data in the cut buffer, then flow proceeds down path 216 and a test at decision tree at 218 is performed to determine whether there is sound data at the target. If there is sound data at the "target", flow proceeds down path 238, the target being the line on to which sound is trying to be pasted. If there is sound data at the target. at box 240 all sound data remaining in the cut buffer is inserted and flow proceeds down path 242 to exit at 250 back to Fig. 11, point 210.

As indicated at block 218, if there is only sound data in the cut buffer and there is no sound data at the target, flow proceeds down path 220, and the sound segments from the cut buffer are removed as indicated at block 222. Flow then proceeds down path 224 and that sound is overlayed at the destination (i.e., the target). This basically means there was no sound data and so the system could overlay points or, alternatively if there was no data at the cut buffer the system could just insert the sound data as shown at 226.

Still referring to Fig. 12, flow proceeds down path 228, to test at 230 if there is more data in the cut buffer. If there is no more data, flow proceeds down path 244 and returns at 250 to Fig. 11, point 210. As indicated at decision tree 230 if more data exists in the cut buffer flow proceeds up path 232 to increment to the next line where in data is to be inserted at step 234. Flow then proceeds down path 236 to again check if there is sound data at the target at decision tree 218.

Referring now to Fig. 13, point D, at box 254 (which was branched to from Fig. 12, box 254, and may be referred to as a "sound not only in cut buffer" subroutine) at this state sound and point data exist in the cut buffer and it is desired to paste them. Accordingly flow proceeds down path 256 and a test of whether data exists at the destination is performed, i.e., whether or not the audio file is empty, as shown by decision tree 258. If the file is empty, flow proceeds up path 262 and all lines are inserted in the cut buffer into the file, shown by block 264. Flow then proceeds along path 268 and branches to 270 and a return at 274. At decision tree 258, if the audio file is not empty, this indicates there is data there to paste, and flow thus proceeds down path 260 to decision tree 276. If there is sound data on the target line, flow proceeds down path 282 and system 10 performs step 264 whereby all lines are inserted in the cut buffer again. The system then exits path 268 to branch 270 and exits at 274 through path 272.

As indicated at step 276, a test is performed then of whether there is sound data on the target line. If not, indicated by path 278, a test at decision tree 280 is performed. If there is no sound data and a non-blank point on the target, then flow occurs along path 284 to step 264, whereupon all the lines from the cut buffer are inserted. path 268 to point 270 is then again executed and thence path 272 to return at 274. Referring again to step 280 which is a decision tree testing for no sound and a non-blank point on the target, we now have the case where in other words there is point and sound data to insert in the cut buffer and the destination is not an empty file, i.e.. a blank point is possible between lines that have sound and point data on them. Thus, for example, a line may exist with sound on it and a comment, a next line which is totally blank, and then followed by a line again had sound and comment data. It is desired to be able to insert the next line from the paste buffer and actually overlay that intermediate line. This is the type of situation indicated at 280. Given that situation, flow proceeds down path 286 to step 288 wherein one sound and point line of data are removed from the cut buffer. Flow then proceeds down path 290 whereupon overlay of the line from the cut buffer onto the target line is effected as indicated at step 292. Flow then proceeds down path 294 to decision tree 296. If there is more data in the paste buffer then flow proceeds up path 298 to increment to the next line in the cut buffer at 300, and proceed down path 256 back to the loop at 258 which tests where the file is empty. If there is no more data in the paste buffer, the flow proceeds down path 302 and exits at 274 back to Fig. 12 at 254.

With reference now to Fig. 14, there may be seen depicted therein a representative external screen which may appear to the user on the monitor 5 for effecting the user interaction with the system 10 through a suitable input device such as the keyboard 6. In operation, an action bar of functions 354 is provided on the screen whereby a particular action or operation of the audio editor may be selected by means of any pointing device such as a cursor, mouse, or by command line input. As was the case with the illustrations of Fig. 1D - Fig. 8, areas on the screen are provided to display the Play Times at 350 as well as user comments at 352 associated with each audio segment. Play Times and the correlative user points or user comments will be displayed at a given time for material either from the source A or target B.

It will be noted that one of the available action bar commands 354 is an edit command 356. When this command is activated by the user, an edit window 358 will appear listing commands of the audio editor system previously described with reference to the flow diagrams and relating to the edit function of the editor. More particularly, it will be noted from the window 358 that, for example, the copy command 360 and paste command 362 may be selected by activating the appropriate control key 364 in the window 358. Selection of the particular lines of material for copying or the precise location of the destination of the copied material wherein it will be pasted may be selected by activating these copy or paste commands after identifying the appropriate material to be copied or pasted by means of cursor control or other pointing devices which will highlight the material on the screen prior to the user executing the desired action as indicated by the command keys 364.

There has been described a system and method for facilitating the editing of digitized audio data and commentary associated with such data under digital computer-assisted control. Differing types of data objects stored within an audio file in a computer may be cut and pasted separately or treated as a single object. Provision is made for storing points objects and audio index objects alone or in combination both with respect to a source and target file. Combinations of these objects in the source and target files which must be accommodated during cut and paste operations are handled by the system which accommodates maintaining temporal and spatial relationships between objects during these editing operations.

In a preferred embodiment of the invention, a method is provided for computer system-assisted editing of audio data objects and/or points objects associated with source and target files, comprising

a. detecting a desired user-indicated cut operation in response to user input to the system;

b. executing a points/audio cut subroutine in response to the indicated cut operation;

c. detecting a desired user-indicated paste operation in response to user input to the system; and

d. executing a paste subroutine in response to the indicated paste operation.

Also in a preferred embodiment of the invention, apparatus for computer system-assisted editing of audio data objects and points objects is provided comprising means for displaying a plurality of Play Times and corresponding comments; means for designating from a first of the displays selected ones of the Play Times and the comments to be cut and pasted; means for designating from a second of the displays a location between other selected ones of the Play Times for the pasting of the selected ones of the Play Times and the comments; and means for cutting and pasting the selected ones of the Play Times and comments to the location.

While the invention has been shown and described with reference to particular embodiments thereof, it will be understood by those skilled in the art that the foregoing and other changes may be made therein without departing from the scope of the invention.

**Claims**

1. Data processing system for editing audio data objects and points objects comprising:
storage means for storing the audio data objects and the points objects;
means for displaying a plurality of play times and corresponding comments, associated with the audio data objects and points objects
means for designating selected ones of the play times and the comments to be cut and pasted;
means for designating a location between other selected ones of the play times for the pasting of the selected ones of the play times and the comments; and
logic for cutting and pasting the selected ones of the play times and comments to the location.

2. Data processing system as claimed in Claim 1 wherein each play time indexes to a unique segment of digitized audio data.

3. Data processing system as claimed in Claim 1 or Claim 2 wherein the other selected ones of the play times and the audio data segments corresponding to the other selected ones of the play times have a predetermined temporal interrelationship; and wherein the logic for cutting and pasting preserves the temporal interrelationship after the pasting of the selected ones of the play times and the comments.

4. Data processing system as claimed in Claim 1 or Claim 2 wherein the other selected ones of the play times and the audio data segments corresponding to the other selected ones of the play times have a predetermined spatial interrelationship; and wherein the logic for cutting and pasting preserves the spatial interrelationship after the pasting of the selected ones of the play times and the comments.

5. Data processing system as claimed in any preceding claim wherein the storage means includes a cut buffer.

6. Data processing system as claimed in Claim 5 comprising logic for determining if the points objects only are in the cut buffer.

7. Data processing system as claimed in any preceding claim wherein the audio objects and points objects are associated with source and target files, the system comprising
logic for determining whether an audio file is empty; and
means for inserting all lines from the cut buffer in the target file in response to determination of the audio file being empty.

8. A method for editing audio data objects and points objects associated with source and target files, the method comprising the steps of:
(a) detecting a desired user-indicated cut operation in response to user input to the system;
(b) processing the audio data objects and points objects in response to the indicated cut operation;
(c) detecting a desired user-indicated paste operation in response to user input to the system;
(d) processing the audio data objects and points objects in response to the indicated paste operation.

9. A method as claimed in Claim 8 wherein the step (d) comprises the step of
(e) detecting if the points objects only are in a cut buffer.

10. A method as claimed in Claim 9 including on detection that not only points objects are in the cut buffer
(f) detecting if the audio objects only are in the cut buffer.

11. A method as claimed in Claim 10 comprising, on detection that not only audio objects are in the cut buffer, the step of
(g) detecting whether an audio file is empty; and inserting all lines from the cut buffer in the target file in response to the detecting when the audio file is empty.

12. A method as claimed in Claim 11 comprising, on detection that not only audio objects are in the cut buffer, the further step of
(h) detecting whether one of the audio objects is present on a target line in the target file; and inserting all lines from the cut buffer into the target file in response to the detecting of the audio object on the target line.

13. A method as claimed in Claim 12 comprising, on detection that not only audio objects are in the cut buffer, the further step of
(i) detecting if no the audio object and a non-blank the point object are on the target line; and inserting all lines from the cut buffer in the target file in response to the detection of no audio object and the non-blank point object being on the target line.

14. A method as claimed in Claim 13 comprising, on detection that not only audio objects are in the cut buffer, the further step of
(j) deleting one line of the audio object and the point object from the cut buffer.

15. A method as claimed in Claim 14 comprising, on detection that not only audio objects are in the cut buffer, the further step of
(k) overlaying the deleted line of the audio object and point object onto the target line.

16. A method as claimed in Claim 15 comprising, on detection that not only audio objects are in the cut buffer, the further step of
(l) detecting upon completion of the step (l) whether additional data is in a paste buffer.

17. A method as claimed in Claim 16 comprising, on detection that not only audio objects are in the cut buffer, the further step of
(m) incrementing to a next audio object and/or point object in the source file.

EP 0 404 399 A2

FIG. 1A

FIG. 1B

FIG. 1C

PLAY TIME        USER POINTS

```
----------------+-------------------------------
1)   0000            USER COMMENT 1
2)   0001
3)   0002            USER COMMENT 2
4)   - - -           USER COMMENT 3
5)   - - -           USER COMMENT 4
6)   0003            USER COMMENT 5
```

2B

**FIG. 1D**

1B

PLAY TIME        USER POINTS

```
----------------+-------------------------------
1)   0000            USER COMMENT 1
2)   0001
3) -> 0002 <-                        <- NEW SOUND (INSERTED)
4) -> 0003 <-                        <- NEW SOUND (INSERTED)
5)   0004            USER COMMENT 2
6)   - - -           USER COMMENT 3
7)   - - -           USER COMMENT 4
8)   0005            USER COMMENT 5
```

**FIG. 2**

PLAY TIME        USER POINTS

```
------------+-------------------------------
1)   0000       USER COMMENT 1
2)   0001
3)   0002       USER COMMENT 2
4) -> 0003 <-   USER COMMENT 3 <- NEW SOUND (OVERLAYED)
5) -> 0004 <-   USER COMMENT 4 <- NEW SOUND (OVERLAYED)
6) -> 0005 <-                  <- NEW SOUND (INSERTED)
7)   0006       USER COMMENT 5
```

**FIG. 3**

PLAY TIME        USER POINTS

```
----------+-------------------------------
1)   0000            USER COMMENT 1
2)   0001
3)   0002         -> USER COMMENT 1 <- INSERTED POINT
4)   - - -        -> USER COMMENT 2 <- INSERTED POINT
5)   - - -           USER COMMENT 2
6)   - - -           USER COMMENT 3
7)   - - -           USER COMMENT 4
8)   0003            USER COMMENT 5
```

**FIG. 4**

EP 0 404 399 A2

```
PLAY TIME          USER POINTS

---------+-------------------------------
1)   0000          USER COMMENT 1
2)   0001       -> NEW COMMENT 1 <- OVERLAYED POINT
3)   - - -      -> NEW COMMENT 2 <- INSERTED POINT
4)   - - -      -> NEW COMMENT 3 <- INSERTED POINT
5)   0002          USER COMMENT 2
6)   - - -         USER COMMENT 3                    FIG. 5
7)   - - -         USER COMMENT 4
8)   0003          USER COMMENT 5
```

```
              PLAY TIME          USER POINTS

          ----------+----------------------------
          1)   0000          USER COMMENT 1
          2)   0001
          3)   0002          USER COMMENT 2
          4)   - - -         USER COMMENT 3
          5)   - - -         USER COMMENT 4
          6) -> 0003         NEW COMMENT 1 <- INSERTED SOUND/POINT
          7) -> 0004         NEW COMMENT 2 <- INSERTED SOUND/POINT
          8)   0005          USER COMMENT 5

FIG. 6        CUT DATA:   000x      NEW COMMENT 1
                          000x+1    NEW COMMENT 2
```

```
PLAY TIME          USER POINTS

---------+-------------------------------
1)   0000          USER COMMENT 1
2)   0001
3)   0002          USER COMMENT 2
4)   - - -
5)   - - -         USER COMMENT 3
6)   0003          USER COMMENT 4

   CUT DATA:   000x      NEW COMMENT 1     FIG. 7
               000x+1    NEW COMMENT 2
```

```
              PLAY TIME          USER POINTS

          ----------+----------------------------
          1)   0000          USER COMMENT 1
          2)   0001
          3)   0002          USER COMMENT 2
          4) -> 0003         NEW COMMENT 1 <- OVERLAYED SOUND/POINT
          5) -> 0004         NEW COMMENT 2 <- INSERTED SOUND/POINT
FIG. 8    6)   - - -         USER COMMENT 3
          7)   0005          USER COMMENT 4
```

EP 0 404 399 A2

FIG. 9

FIG. 10

FIG. 11

**FIG. 12**

**FIG. 13**

Prompt   Audio   Edit   Mix   Controls   Print   File   Exit   Help

Audio A:  x x x x x x x . . . . . . . . . . . .(x)      Audio B:  x x x x x x x x. . : . . . . . . . . .(x)

| Play Time | Sound | Synch Label | Comments 2B | Sound Control | | |
|---|---|---|---|---|---|---|
| | | | | Method | Vol | Time |
| | | | | | | |

EDIT

| | | |
|---|---|---|
| Undo | *360* | Alt U |
| Copy | | Alt C |
| Lift | | Alt L |
| Paste | *362* | Alt P |
| Insert lines | | Alt I |
| Delete lines | *364* | Alt D |
| Zoom . . . | | Alt Z |

**FIG. 14**

EP 0 404 399 A2